# EUROPEAN PATENT APPLICATION

(11) **EP 4 712 106 A1**
(43) Date of publication of application: **18.03.2026**
(21) Application number: 24200332.5
(22) Date of filing: 13.09.2024
(51) Int. Cl.: H01B 3/56, H01B 3/40, H02B 13/035

(54) **APPARATUS FOR THE GENERATION, THE DISTRIBUTION AND/OR THE USAGE OF ELECTRICAL ENERGY AND COMPONENT FOR SUCH AN APPARATUS**

(71) Applicant: Hitachi Energy Ltd, 8050 Zürich (CH)
(72) Inventor: HOANG, Philip, 8003 Zürich (CH); MAURER, Victoria Alexandra Brigitta, 4500 Solothurn (CH); EHRLER, Isabell, 8045 Zürich (CH); BUFFONI, Saskia, 5103 Möriken (CH); KRAWCZYK, Pawel, 5400 Baden (CH)
(74) Representative: Schaad, Balass, Menzl & Partner AG

(57) **Abstract**

The invention relates to an apparatus (10) for the generation, the distribution and/or the usage of electrical energy, or a component of such an apparatus, said apparatus comprising a housing (42) enclosing an insulating space (44), said insulating space containing a dielectric insulation medium comprising an organofluorine compound. The apparatus or component comprises an insulation medium interface directly exposed to the insulation medium in the assembled state and the insulation medium interface is at least partially formed by a coating (62). The coating (62) is an epoxy-based coating obtained by curing a curable resin composition containing an epoxy resin and an amine compound as curing agent.

## Description

The present invention relates to an apparatus for the generation, the distribution and/or the usage of electrical energy, or a component of such an apparatus.

In an apparatus of the type mentioned above, such as in a medium or high voltage metal-encapsulated switchgears, an electrically conductive part is often arranged in a gas-tight housing, which defines an insulating space. Typically, the insulation space comprises an insulation gas and separates the housing from the electrically conductive part without letting electrical current to pass through the insulation space. For interrupting the current in e.g. high voltage switchgears, the insulating gas further functions as an arc extinction gas.

Recently, the use of organofluorine compounds in a dielectric insulation gas has been suggested as an environment-friendly alternative to sulfur hexafluoride (SF₆) that was used most frequently until recently.

Specifically, WO2010/142346 discloses a dielectric insulation medium comprising a fluoroketone containing from 4 to 12 carbon atoms. Fluoroketones have been shown to have high insulation capabilities, in particular a high dielectric strength, as well as high arc extinction capabilities. At the same time, they have a very low Global Warming Potential (GWP) and very low toxicity. The combination of these characteristics renders these fluoroketones highly suitable as a possible alternative to conventional insulation gases.

Other alternatives have also been developed in which fluoronitriles are used, for example as disclosed in WO 2014/037566.

US2019156968A1 discloses a hybrid insulation system based on a gaseous medium comprising heptafluoroisobutyronitrile in a mixture with a neutral gas for use as a gas for electrical insulation and/or for electric arc extinction in medium- or high-voltage equipment, in combination with solid insulation of low dielectric permittivity. A thin layer of solid insulation is applied on the conductive parts that are subjected to an electric field that is greater than the breakdown field of the system without solid insulation. The solid insulation layer is made of a material comprising a polyepoxide resin optionally containing a filler, a polyurethane resin optionally containing a filler, or aluminum oxide. In particular, the surface treatment is described as leading to a significant increase of dielectric strength under a lightning impact for surfaces of aluminum parts obtained by rough casting that present substantial roughness. Indeed, the surface treatment contributes to smoothing the parts.

WO2015052100A1 discloses an apparatus for the generation, the distribution and/or the usage of electrical energy. The apparatus comprises a housing enclosing an insulating space and an electrically conductive part arranged in the insulating space, said insulating space containing a dielectric insulation medium, a portion of which being in the form of an insulation gas comprising an organofluorine compound. At least some of the components of the apparatus that are directly exposed to the insulation gas are made of a material which remains unaltered during exposure to the insulation gas for a period of more than 1 year at operational conditions and/or have a surface, at least a portion of which is devoid of any nucleophilic group reactive towards the organofluorine compound and/or reactive towards degradation product thereof at operational conditions.

Notwithstanding the excellent properties of these insulation gas, it has unexpectedly been found that care must be taken to avoid a reduction in their insulation capacity and arc extinction performance over prolonged operation times. In particular, it has been observed that components of the apparatus that are directly exposed to the insulation gas or surfaces of these components formed by solid insulation show material incompatibility in that insulation gas can react with the material. O-ring used to avoid insulation gas leaks can also be the source of material incompatibility. As a result, the insulating performance can degrade, and a situation could ultimately occur that maintenance intervals are shortened or that operation of the apparatus should prematurely be interrupted to replace at least a portion of the insulation gas.

In consideration of the above, the problem to be solved by the present invention is thus to provide an apparatus for the generation, the distribution and/or the usage of electrical energy or a component thereof, said apparatus comprising an insulation medium containing an organofluorine compound in general, and allowing at the same time for a safe and efficient operation over a relatively long period of time. In particular, surfaces of the apparatus or of components thereof covered with a solid insulation and directly exposed to the insulation medium should have an increased material compatibility exhibiting a minimized capacity of reaction with the insulation medium to avoid a degradation of insulation performance.

The problem is solved by the subject matter of the independent claims. Preferred embodiments of the invention are defined in the dependent claims and in claim combinations.

An apparatus for the generation, the distribution and/or the usage of electrical energy or a component of such an apparatus, is disclosed, said apparatus comprising a housing enclosing an insulating space. The insulating space contains a dielectric insulation medium that comprises an organofluorine compound, wherein the apparatus or component comprises an insulation medium interface directly exposed to the insulation medium in the assembled state and the insulation medium interface is at least partially formed by a coating.

Specifically, the term "component" as used in the context of the present invention relates to any electrical or electronic component that can be passive or active, and that is completely or only partially contained in the insulating space.

The component of the apparatus comprises a component body and the coating covering at least partially the component body in the insulation medium interface directly exposed to the insulation medium. The portion of the component that is covered by the coating is also referred to as the substrate on which the coating is applied.

The insulation medium interface is in the context of this application "directly exposed to the insulation medium" when it is in direct contact with the insulation medium.

According to the invention, the coating is an epoxy-based coating obtained by curing a curable resin composition containing an epoxy resin and an amine compound as curing agent.

The presence of the coating formed by an epoxy-based coating provides a barrier between the portion of the component that is directly exposed to the insulation medium and the dielectric insulation medium itself. The epoxy-based coating avoids that the insulation medium reacts with the components of the apparatus and/or that substances present in or at the surface of the component diffuse into the insulating space. Hence, the integrity of both the solid component of the apparatus and the insulation medium is maintained over a relatively long period of time.

For example, outgassing of volatile organic compound from the material of the component can be reduced. As a result, not only the functionality of the component remains unaffected, but also a potential reaction of the volatile organic compound with other compounds is prevented.

Further, traces of humidity present in the component of the apparatus can deteriorate the insulation capability not only of the insulation medium, but also of any other insulator, such as solid spacers and insulators. In particular in view of the use of an organofluorine compound, more particularly a fluoroketone, this organofluorine compound or fluoroketone can react with water to a corrosive and toxic decomposition product.

Among other systems available to coat the substrate, including organic coatings like among other alkyd coatings or polyurethane coatings, and inorganic coatings like acrylic coatings, ceramic coatings or intumescent coatings, the epoxy-based coating of the present invention has shown no or only very low degradation of insulation gas, in particular as measured by the formation of heptafluoropropane or by change of chemical surface structure revealed by infrared lighting.

Overall, chemical reactions leading to early aging of the insulation medium and of the substrate, ultimately leading to deterioration of the component, can be avoided or largely reduced.

In addition, the epoxy-based coating provides for an improved dielectric capacity of the insulation medium interface that is coated and smoothens out the surface of the component body. The improved dielectric performance of the component itself contributes to a substantial benefit of the apparatus as a whole. Indeed, partial discharge and insulation breakdowns can be further reduced as well as the risk of potential flashover.

Ultimately, the invention allows for a long service lifetime and a low maintenance of the apparatus.

The term "insulation medium" as used in the context of the present invention relates to an insulation fluid. Since at least a portion of the insulation medium is in the form of an insulation gas, the insulation medium can be entirely in gaseous form or can be a two-phase system comprising a portion in gaseous form and a portion in liquid form.

The insulation medium, and in particular the insulation gas, can comprise one or more degradation products of the organofluorine compound. This can in particular be the case when the apparatus is a switching apparatus.

Curing the curable resin composition can be performed by mixing the epoxy resin with the amine compound acting as a hardener, and can in particular be induced by heating (in which case the resin composition is referred to as being heat-curable) . During the step of curing the resin composition, a cross-linking network is created between the epoxy resin and the amine compound, whereby the curable resin composition turns into a solid state.

In a preferred embodiment, the apparatus is a gas-insulated apparatus, that can be or can be part of a high voltage apparatus, medium voltage apparatus, low voltage apparatus, direct- current apparatus, switchgear, air-insulated switchgear, a gas-insulated metal-encapsulated switchgear, also referred to as GIS, gas-insulated transmission line, also referred to as GIL, gas-insulated cable, cable joint, current transformer, voltage transformer, sensors, humidity sensors, surge arrester, capacitor, inductance, resistor, current limiter, high voltage switch, earthing switch, disconnector, combined disconnector and earthing switch, load-break switch, circuit breaker, gas circuit breaker, gas-insulated vacuum circuit breaker, generator circuit breaker, medium voltage switch, ring main unit, recloser, sectionalizer, low voltage switch, any type of gas- insulated switch, transformer, distribution transformer, power transformer, tap changer, transformer bushing, electrical rotating machine, generator, motor, drive, semiconducting device, power semiconductor device, power converter, converter station, convertor building; and components and/or combinations of such devices.

Specifically, the term "medium voltage" is used in the conventionally accepted manner, i.e. the term "medium voltage" refers to a voltage that is greater than 1000 volts (V) for alternating current (AC) and greater than 1500 V for direct current (DC) but that does not exceed 52,000 V for AC, or 75,000 V for DC. The term "high voltage" is used in the conventionally accepted manner, i.e. the term "high voltage" refers to a voltage that is strictly greater than 52,000 volts for AC and greater than 75,000 V for DC.

In a preferred embodiment, the component is a bushing. Bushings are frequently made of materials like epoxy composite-based insulated paper that can be degraded in the presence of the insulation medium. The dielectric performance of the bushing can be improved by the presence of the coating, thereby improving the performance of the apparatus.

A typical bushing is a hollow electrical insulator body that allows an electrical conductor, usually of copper or aluminum, to pass safely through a conducting barrier such as the casing of a transformer or circuit breaker without making electrical contact with it. The conductor is surrounded by insulation, except for the terminals. The insulation can be made of an insulating material formed by resin impregnated paper (RIP) or resin impregnated synthetic (RIS). In some embodiments, the insulating material can be covered by a resin that is cast over the insulating material.

The bushing is formed as a bushing body that comprises a conducting core extending axially, for example an electrical conductor, a condenser core extending axially from a first end to a second end forming an insulation arranged radially along the conducting core to insulate the conducting core from other conductive elements or from its environment. The bushing further comprises a first terminal and a second terminal connected at each end of the condenser core. The first and second terminals are designed for the connection of the bushing to an electrically conductive device. The bushing further comprises a flange arrangement to allow a tight fluid connection between two distinct regions in which the bushing extends. The flange arrangement comprises at least a first flange projecting radially from the condenser core and being designed to ensure a fluid tight connection between the bushing and the housing of the apparatus.

In a preferred embodiment, the coating is applied on a bushing body and/or a gas shield of the bushing and/or a terminal of the bushing. The resulting embodiment allows for a long service lifetime and a low maintenance of the bushing.

In a preferred embodiment, the apparatus comprises a gas-insulated switchgear and the bushing is located completely in the insulating space of the gas insulating switchgear or is passing through a conduction barrier between the insulating space of the gas insulating switchgear and the environment. In another preferred embodiment, the apparatus comprises a gas insulating switchgear and a transformer, wherein the bushing passes through a conducting barrier between the insulating space of the gas insulating switchgear and the transformer. The bushing can be a current carrying bushing operated actively or passively in the insulating space. These embodiments allow for a long service lifetime and a low maintenance of the apparatus.

In a preferred embodiment, the surface of the components covered by the coating is made of metal, preferably of machined aluminum, or of paper, preferably impregnated with a resin, more preferably reinforced by glass fibres. In the case of a bushing, the surface of the component can be a substrate formed by resin impregnated paper (RIP) or resin impregnated synthetic (RIS). US2019156968A1 teaches that for rough cast components the addition of a surface treatment significantly improves the overall dielectric strength, whereas this effect is not observed for polished parts of low roughness. In contrast to this teaching, it has been observed that when the substrate has a low roughness, like in the case of machined aluminum, the use of the coating according to the invention improves the overall dielectric strength of the component.

In a preferred embodiment, the thickness of the coating is at least 40 µm. This range of thickness has been found to be a limit above which the barrier effect between the portion of the component that is directly exposed to the insulation medium and the dielectric insulation medium itself benefits the apparatus. Preferably the thickness of the coating is at least 60 pm, more preferably at least 60 µm and less than 200 µm. This range of thickness has been found to be suited for most applications in the medium and high voltage. A thicker coating can become difficult to apply with standard methods and are therefore preferably kept under 200 µm. More preferably the thickness of the coating is between 60 µm and 90 µm. This range provides for an optimum result between dielectric insulation and simple production methods. By providing this barrier effect, the epoxy-based coating avoids that the insulation medium reacts with the components of the apparatus and/or that substances present in or at the surface of the component diffuse into the insulating space.

In a preferred embodiment, the epoxy resin composition contains less than 1,0 wt.%, preferably less than 0,5 wt.%, more preferably less than 0,2 wt.% of water and/or less than 5.0 wt.% preferably less than 2.0 wt.%, more preferably less than 0,5 wt.% of components containing a functional hydroxyl group or of hygroscopic components, in particular amide components. These embodiments must be understood as comprising the combinations of less than 1,0 wt.% of water and less than 5.0 wt.% of components containing a functional hydroxyl group or of hygroscopic components, less than 1,0 wt.% of water and less than 2.0 wt.% of components containing a functional hydroxyl group or of hygroscopic components, less than 1,0 wt.% of water and less than 0.5 wt.% of components containing a functional hydroxyl group or of hygroscopic components, less than 0.5 wt.% of water and less than 5.0 wt.% of components containing a functional hydroxyl group or of hygroscopic components, less than 0.5 wt.% of water and less than 2.0 wt.% of components containing a functional hydroxyl group or of hygroscopic components, less than 0.5 wt.% of water and less than 0.5 wt.% of components containing a functional hydroxyl group or of hygroscopic components, less than 0.2 wt.% of water and less than 5.0 wt.% of components containing a functional hydroxyl group or of hygroscopic components, less than 0.2 wt.% of water and less than 2.0 wt.% of components containing a functional hydroxyl group or of hygroscopic components, less than 0.2 wt.% of water and less than 0.5 wt.% of components containing a functional hydroxyl group or of hygroscopic components. The latter combination is preferred for the higher quality of the coating obtained. As a result of a low content of water and a low content of components containing a functional hydroxyl group or of hygroscopic components, the epoxy resin composition exhibits a reduced capacity of reaction with the insulation medium to avoid a degradation of insulation performance.

In a preferred embodiment, the epoxy resin is essentially free of water, free of components containing a functional hydroxyl group or of hygroscopic components, in particular amide components. This epoxy resin composition minimizes the capacity of reaction with the insulation medium.

In a preferred embodiment, the curable resin composition is in the form of a paint applied on the surface directly exposed to the insulation medium. Advantageously, paint can be applied in a simple manner during the manufacturing process and the thickness of the coating can be controlled easily.

In a preferred embodiment, the amine compound is a polyamine or amino adduct.

In a preferred embodiment, the organofluorine compound comprised in the dielectric insulation medium is selected from the group consisting of fluoroethers, in particular hydrofluoromonoethers, fluoroketones, in particular perfluoroketones, fluoroolefins, in particular hydrofluoroolefins, and fluoronitriles, in particular perfluoronitriles, and mixtures thereof. Such insulation media allow at the same time for a safe and efficient operation over a relatively long period of time of the apparatus.

In a more preferred embodiment, the organofluorine compound is heptafluoroisobutyronitrile, which is preferred due to its relatively low boiling point, its good dielectric properties and its low toxicity.

In a further preferred embodiment, the insulation medium comprises carbon dioxide (CO₂). Additionally or alternatively, the insulation medium comprises air or at least one air component, in particular selected from the group consisting of oxygen (O₂), nitrogen (N₂), carbon dioxide (CO₂), and mixtures thereof.

In a preferred embodiment, the apparatus comprises at least one gas seal for sealing off the insulating space from a further space, the gas seal being in direct contact with the coating. In this embodiment, the insulation medium interface that is coated has a smoother surface that allows an improved sealing between the gas seal and the smoother surface. The gas seal can be an O-ring for its convenience of use.

In a more preferred embodiment, the component is a bushing and the insulation medium interface that is coated includes at least a portion of a flange of the bushing on the side in contact with a gas seal designed to seal off the flange of the bushing and the insulating space.

In a more preferred embodiment, the gas seal comprises a butyl rubber. Butyl rubber can be used as a sealing material to obtain gas seals that are highly compatible with organofluorine compounds. In addition, butyl rubber is also compatible with the epoxy-based coating. Overall, the sealing function can be maintained over longer period of time, thereby reducing maintenance efforts. Moreover, the permeability to possible components of the insulation medium like CO₂, O₂, N₂ and/or air, is very low. Advantageously, the apparatus can be operated at higher pressures.

The present invention is further illustrated by way of the attached figures.

### Description of the figures

Fig. 1 shows an embodiment of the apparatus according to the invention comprising a gas-insulated switchgear and a transformer connected by a bushing;
Fig. 2 shows a further embodiment of the apparatus according to the invention comprising a gas-insulated switchgear and a bushing partially in contact with the environment; and
Fig. 3 shows an embodiment of a gas seal in the form of an O-ring that can be used in the apparatus in the region indicated by the letter "A" in Fig. 1.

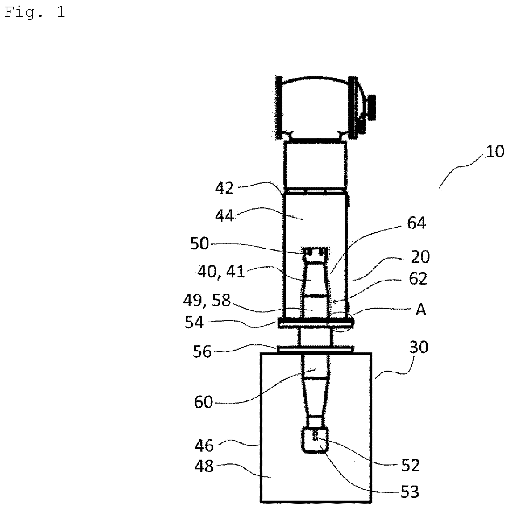

An apparatus 10 for the generation, the distribution and/or the usage of electrical energy is disclosed schematically in Fig. 1 in the form of a gas insulated switchgear 20 associated to a transformer 30, a bushing 40 being arranged between the gas insulated switchgear and transformer.

The gas insulated switchgear 20 comprises a housing 42 enclosing an insulating space 44, wherein the insulating space contains a dielectric insulation medium that comprises an organofluorine compound.

In the present embodiment, the transformer 30 is an oil-filled transformer that comprises a transformer housing 46 enclosing a transformer insulating space 48 that contains mineral oil as a dielectric insulation and cooling medium.

The bushing is formed as a bushing body 41 that comprises a conducting core extending axially, a condenser core 49 extending axially from a first end to a second end forming an insulation arranged radially along the conducting core to insulate the conducting core from other conductive elements or from its environment, as well as a first terminal 50 and a second terminal 52 connected at each end of the condenser core and arranged at the level of the first end and the second end of the condenser core. The first and second terminals are designed for the connection of the bushing to an electrically conductive device that is not represented in Fig. 1. In addition, the second terminal 52 of the bushing is protected by a shield 53. The bushing further comprises a flange arrangement to allow a tight fluid connection between two distinct regions in which the bushing extends.

In the embodiment of Fig. 1, the bushing body extends in a first region formed by the insulating space 44 of the gas insulated switchgear containing the dielectric insulation medium and in a second region formed by the transformer insulating space 48.

The flange arrangement comprises a first flange 54 and a second flange 56 projecting radially from the condenser core and arranged at an axial distance from each other, the first flange and the second flange being designed to ensure a fluid tight connection between the bushing and the housing 42, and between the bushing and the transformer housing 46, respectively.

The first flange 54 delimits a first section 58 of the condenser core 49 extending axially from the first flange 54 in direction to the first end of the condenser core, and the second flange 56 delimits a second section 60 of the condenser core 49 extending axially from the second flange 56 in direction to the second end of the condenser core. The first section 58 extends in the insulating space and the second section 60 extends in the transformer insulating space.

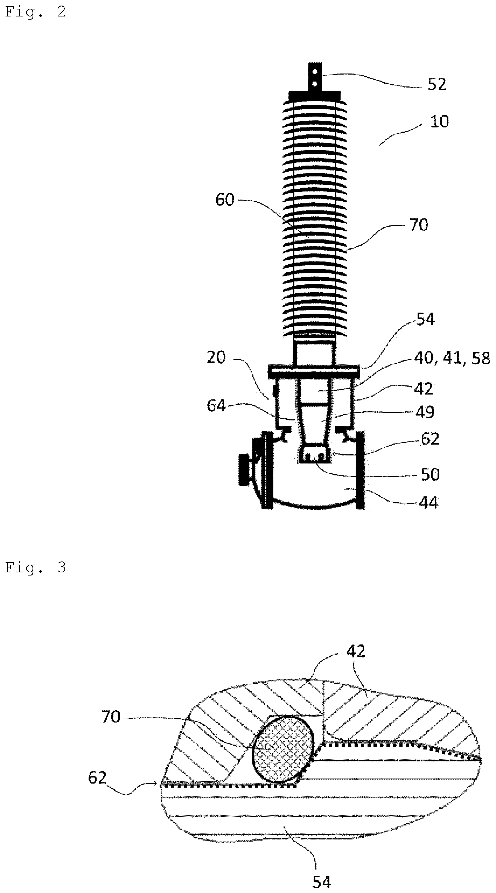

Further, the flange arrangement comprises a gas seal arranged between the first flange 54 and the housing 42 for the fluid tight connection. An embodiment of the gas seal is discussed later in relation to Fig. 3.

The bushing 10 further comprises a coating 62 covering at least partially the bushing body 41 in an insulation medium interface in the form of a bushing interface 64 directly exposed to the dielectric insulation medium comprising an organofluorine compound. The bushing interface 64 is thereby at least partially formed by the coating 62. In the embodiment of Fig. 1, the coating 46 covers the first section 58 of the condenser core 40 and the first terminal 50.

A further embodiment of the apparatus disclosed schematically in Fig. 2 comprises a gas-insulated switchgear 20, and a bushing 40 associated to the gas-insulated switchgear and partially in contact with the environment, specifically the natural atmosphere. Same reference numerals are used in the description of Fig. 2 as for Fig. 1 for parts having the same function.

The gas insulated switchgear 20 comprises a housing 42 enclosing an insulating space 44, wherein the insulating space contains a dielectric insulation medium that comprises an organofluorine compound.

The bushing is formed as a bushing body 41 that comprises a conducting core extending axially, a condenser core 49 extending axially from a first end to a second end forming an insulation arranged radially along the conducting core to insulate the conducting core from other conductive elements or from its environment, as well as a first terminal 50 and a second terminal 52 connected at each end of the condenser core and arranged at the level of the first end and the second end of the condenser core. The first and second terminals are designed for the connection of the bushing to an electrically conductive device that is not represented in Fig. 2. The bushing further comprises a flange arrangement to allow a tight fluid connection between two distinct regions in which the bushing extends.

In the embodiment of Fig. 2, the bushing body extends in a first region formed by the insulating space 44 of the gas insulated switchgear containing the dielectric insulation medium and in a second region formed by the environment (i.e. the natural atmosphere).

The flange arrangement comprises a first flange 54 projecting radially from the condenser core and being designed to ensure a fluid tight connection between the bushing and the housing 42.

The first flange 54 delimits a first section 58 of the condenser core 49 extending axially from the first flange 54 in direction to the first end of the condenser core and a second section 60 of the condenser core 49 extending axially from the first flange 54 in direction to the second end of the condenser core. The first section 58 extends in the insulating space and the second section 60 extends in the natural atmosphere.

Further, the flange arrangement comprises a gas seal arranged between the first flange 54 and the housing 42 for the fluid tight connection. An embodiment of the gas seal is discussed later in relation to Fig. 3.

The bushing 10 further comprises a coating 62 covering at least partially the bushing body 41 in a bushing interface 64 directly exposed to the dielectric insulation medium comprising an organofluorine compound. The bushing interface 64 is thereby at least partially formed by the coating 62. In the embodiment of Fig. 2, the coating 46 covers the first section 58 of the condenser core 40 and the first terminal 50.

Fig. 3 is an enlarged view of the region indicated by the letter "A" in Fig. 1 and corresponding to the interface between the housing 42 of the gas insulated switchgear and the first flange 54 of the bushing. A gas seal 70 comprising butyl rubber is arranged for sealing off the insulating space from the environment, wherein the side of the flange in contact with the gas seal 70 is covered by the coating 62. The smoother surface of the side of the flange that is coated allows for an improved sealing between the gas seal 70 and the flange 54.

### List of reference numerals

| | |
|---|---|
| apparatus | 10 |
| gas insulated switchgear | 20 |
| transformer | 30 |
| bushing, bushing body | 40, 41 |
| housing | 42 |
| insulating space | 44 |
| transformer housing | 46 |
| transformer insulating space | 48 |
| condenser core | 49 |
| terminals | 50, 52 |
| shield | 53 |
| first, second flange | 54, 56 |
| first, second section of condenser core | 58, 60 |
| coating | 62 |
| bushing interface | 64 |
| gas seal | 70 |

## Claims

1. Apparatus (10) for the generation, the distribution and/or the usage of electrical energy, or a component of such an apparatus, said apparatus comprising a housing (42) enclosing an insulating space (44), said insulating space containing a dielectric insulation medium comprising an organofluorine compound, wherein the apparatus or component comprises an insulation medium interface directly exposed to the insulation medium in the assembled state and the insulation medium interface is at least partially formed by a coating (62), **characterized in that** the coating (62) is an epoxy-based coating obtained by curing a curable resin composition containing an epoxy resin and an amine compound as curing agent.

2. Apparatus (10) or component according to claim 1, **characterized in that** the component is a bushing (40).

3. Apparatus (10) or component according to claim 2, **characterized in that** the coating (62) is applied on a bushing body (41) and/or a gas shield (53) of the bushing (40) and/or a terminal (50, 52) of the bushing.

4. Apparatus (10) or component according to claim 2 or 3, **characterized in that** the apparatus comprises a gas-insulated switchgear (20) and the bushing (40) is located completely in the insulating space (44) of the gas insulating switchgear or is passing through a conduction barrier between the insulating space (44) of the gas insulating switchgear and the environment, or **in that** the apparatus comprises a gas insulating switchgear (20) and a transformer (30), wherein the bushing (40) passes through a conducting barrier between the insulating space of the gas insulating switchgear and the transformer.

5. Apparatus (10) or component according to any one of the preceding claims, **characterized in that** the surface of the components covered by the coating (62) is made of metal, preferably of machined aluminum, or of paper, preferably impregnated with a resin, more preferably reinforced by glass fibres.

6. Apparatus (10) or component according to any one of the preceding claims, **characterized in that** the thickness of the coating (62) is at least 40 µm, preferably at least 60 pm, more preferably at least 60 µm and less than 200 pm, more preferably between 60 µm and 90 µm.

7. Apparatus (10) or component according to any one of the preceding claims, **characterized in that** the epoxy resin composition contains less than 1,0 wt.%, preferably less than 0,5 wt.%, more preferably less than 0,2 wt.% of water and/or less than 5.0 wt.% preferably less than 2.0 wt.%, more preferably less than 0,5 wt.% of components containing a functional hydroxyl group or of hygroscopic components, in particular amide components.

8. Apparatus (10) or component according to claim 7, **characterized in that** the epoxy resin is essentially free of water, free of components containing a functional hydroxyl group or of hygroscopic components, in particular amide components.

9. Apparatus (10) or component according to any one of the preceding claims, **characterized in that** the curable resin composition is in the form of a paint applied on the surface directly exposed to the insulation medium.

10. Apparatus (10) or component according to any one of the preceding claims, **characterized in that** the amine compound is a polyamine or an amino adduct.

11. Apparatus (10) or component according to any one of the preceding claims, **characterized in that** the organofluorine compound comprised in the dielectric insulation medium is selected from the group consisting of fluoroethers, in particular hydrofluoromonoethers, fluoroketones, in particular perfluoroketones, fluoroolefins, in particular hydrofluoroolefins, and fluoronitriles, in particular perfluoronitriles, and mixtures thereof.

12. Apparatus (10) or component according to claim 11, **characterized in that** the organofluorine compound is heptafluoroisobutyronitrile.

13. Apparatus (10) or component according to any one of the preceding claims, **characterized by** at least one gas seal (70) for sealing off the insulating space from a further space, the gas seal being in direct contact with the coating (62).

14. Apparatus (10) or component according to claim 13, wherein the gas seal comprises a butyl rubber.
